# EUROPEAN PATENT APPLICATION

(11) **EP 2 451 146 A1**
(43) Date of publication of application: **09.05.2012**
(21) Application number: 10306230.3
(22) Date of filing: 09.11.2010
(51) Int. Cl.: H04M 15/00, H04L 12/14, H04M 17/00

(54) **A method, a system, and a server for managing connections in a telecommunications network**

(71) Applicant: Alcatel Lucent, 75007 Paris (FR)
(72) Inventor: Saker, Daniel, 91620 La Ville du Bois (FR)
(74) Representative: Brose, Gerhard

(57) **Abstract**

The invention concerns a method for a system, and a server for managing connections in a telecommunications network (100), wherein a server adapted to execute a computer program representing a real time payment system (101), is adapted to determine a message including a predetermined action depending on information about connection parameters and a predetermined rule, and to send information about said predetermined action to a network resource (102, 103, 104, 105, 106).

## Description

### Field of the invention

The invention relates to a method, a system and a server for managing connections in a telecommunications network.

### Background

In order to manage connections in a telecommunications network, operators of telecommunication networks modify Quality of Service parameters (like data connection speed) according user's subscription states. The third generation partnership project (3GPP) specification 3GPP TS 32.141 version 9.0.0 describes an architecture of such connection management.

### Summary

The object of the invention is to improve connection management.

The main idea of the invention is to manage connections in a telecommunications network, wherein a server adapted to execute a computer program representing a real time payment system, is adapted to determine a message including a predetermined action depending on information about connection parameters and a predetermined rule, and to send information about said predetermined action to a network resource. This way in addition to network parameters, in said predetermined rule the subscriber's profile, credit level, consumption level, Top-up level, account lifecycle and its subscriptions lifecycle are taken into account in the management of said telecommunications network. Furthermore in an interaction between a real time payment system and a policy charging and rules function (PCRF) executing on a network resource, the policy charging and rules function (PCRF) is informed about an action to perform (data connection cut-off, data connection speed slowdown, or data connection revert to speed) according to a user's account balance or subscription status.

Advantageously said message is a XML/HTTP message. In a preferred embodiment the XML/HTTP messages are sent in order to improve compatibility.

Advantageously said message is determined and sent in real time. In a preferred embodiment the XML/HTTP messages are sent in real time to improve response time.

Advantageously an application converts said message from XML/HTTP to a protocol that an intended recipient of said message accepts. This way the existing protocol interfaces of intended recipients, e.g. policy charging and rules function (PCRF), subscription profile repository (SPR), gateways or access points are used.

Further developments of the invention can be gathered from dependent claims and the following description.

### Brief description of the figures

in the following the invention will be explained further making reference to the attached drawings.
Fig. 1 schematically shows a first part of a telecommunication network,
Fig. 2 schematically shows a first sequence diagram, showing some typical sequences according to a first method.
Fig. 3 schematically shows a second sequence diagram, showing some typical sequences according to a second method.

### Description of the embodiments

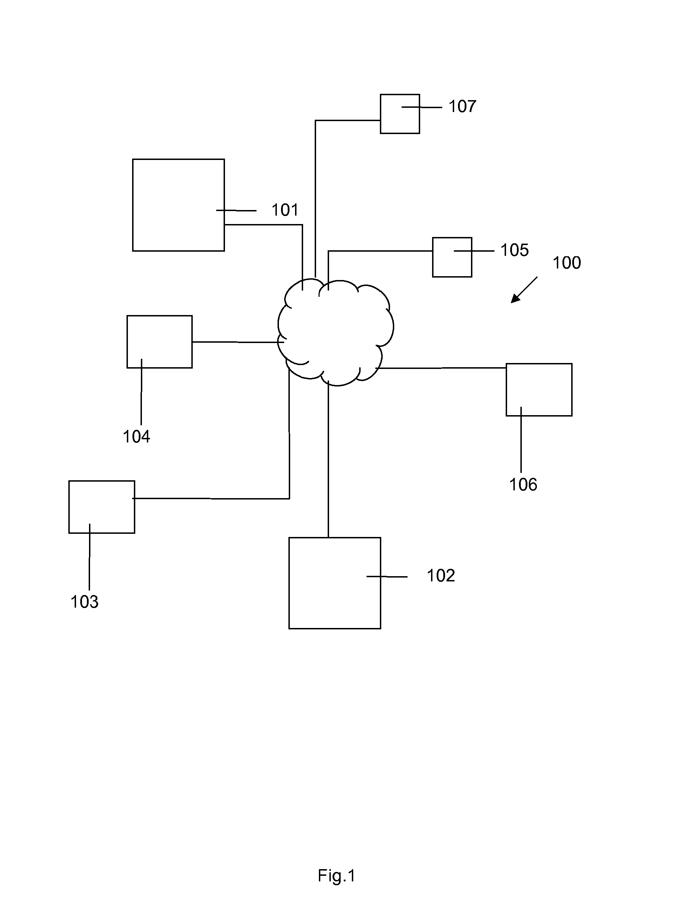

Figure 1 shows a part of a telecommunications network 100.

Said telecommunications network 100 comprises of a first server 101, a second server 102 and a third server 103.

Said first server 101 is adapted to execute a computer program representing a real time payment system for a telecommunications network. Computer programs for real time payment are well known to the person skilled in the art.

Furthermore said first server 101 is adapted to determine a message according to the extensible markup language and hyper text transfer protocol (XML/HTTP). Said extensible markup language is well known for example from the W3C Recommendation of November 28, 2008 "Extensible Markup Language (XML) 1.0 (Fifth Edition)" and is referred to as XML below. Said hyper text transfer protocol is well known for example from the W3C RFC 2616 "Hypertext Transfer Protocol -- HTTP/1.1 - Draft Standard RFC 2616" and referred to as HTTP below. Alternatively to using said XML messages any other type of language for example defining classes of data objects may be used. For example the Standard Generalized Markup Language may be used [ISO 8879]. Alternatively to using said HTTP any other type of transfer protocol may be used. For example the File transfer protocol [RFC959] may be used.

Said second server 102 is adapted to execute a computer program representing a policy charging and rules function (PCRF). Said policy charging and rules function (PCRF) is well known to the person skilled in the art for example from the third generation partnership project (3GPP) specification 3GPP TS 23.203 version 10.1.0. Optionally said second server 102 is adapted to receive and interpret XML/HTTP messages.

Said third server 103 is adapted to execute a computer program representing a subscription profile repository (SPR). Said subscription profile repository (SPR) is well known to the person skilled in the art for example from the third generation partnership project (3GPP) specification 3GPP TS 23.203 version 10.1.0. Optionally said third server 103 is adapted to receive and interpret XML/HTTP messages.

Optionally said telecommunications network 100 comprises of a fourth server 104. Said fourth server 104 is adapted to execute a computer program representing a gateway function for access control to a sub-network. Said access control is for example performed using the well known access point name (APN). Methods for processing access point names (APN) in order to grant access to sub-networks are well known to the person skilled in the art for example from the third generation partnership project (3GPP) specification 3GPP TS 03.03 version 7.8.0.

Optionally said telecommunications network comprises of a fifth server 105. Said fifth server 105 is adapted to execute a computer program representing an application for protocol conversion, Alternatively said application may execute on any other of the aforementioned servers, in which case the respective server is adapted to execute said computer program representing said application.

Said application for protocol conversion is for example adapted to convert said XML/HTTP message into a message according to the diameter protocol well known for example from [RFC 3588].

Said application is adapted to upon receipt of said XML/HTTP message determine a first messages and a second message:
- said first message comprises an instruction to update a policy and charging rule (well known from 3GPP TS 23.203 V10.1.0 as PCC-rule) in said policy charging and rules function (PCRF) according to the Gx interface (well known from 3GPP TS 29.210 V6.7.0),
- a second message comprising an instruction to update a subscriber profile in said subscription profile repository (SPR) according to the Sh interface (well known from 3GPP TS 29.328 V10.0.0).

Furthermore said telecommunications network 100 comprises of any number of clients 107, one of them is depicted in figure 1.

Said clients 107 are adapted to connect to said telecommunications network 100 via data links, depicted in figure 1 as solid lines and cloud symbol.

Said clients 107 are for example mobile phones or any other device adapted to establish a data connection with another client 107 or any other device.

Said clients 107 are adapted to request connection to said telecommunications network 100 upon a trigger. Said trigger is for example a detection of a user input by said client 107.

Said user input is for example a phone number identifying the recipient that the user wants to connect to. Said phone number is for example dialed by said user via a keyboard on said client 107. Any other type of specifying said trigger, like for example voice commands, may be used instead.

Said clients 107 are connected via said telecommunications network 100 upon said trigger for example using resources, i.e. devices or methods, according to the internet protocol multimedia subsystem (well known as ISM). Any other type of connection mechanism such as circuit switching may be used for at least part of said connection as well.

Said resources are for example gateway servers, said data links or said servers. Said resources comprise of predefined interfaces, for example according to said internet protocol multimedia subsystem (IMS).

For billing and policy enforcement for example in said internet protocol multimedia subsystem (IMS) a policy and charging enforcement function (PCEF) according to 3GPP TS 23.203 version 10.1.0 is used. Said policy and charging enforcement function (PCEF) is for example a computer program executing on a sixth server 106. Alternatively said policy and charging enforcement function (PCEF) may be executed on any of aforementioned gateways or servers.

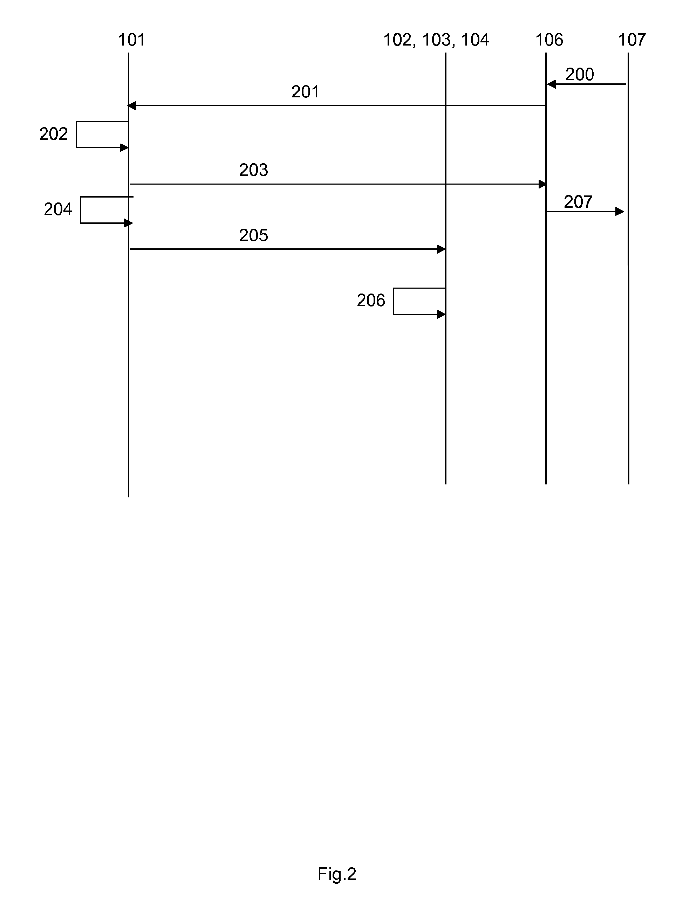

A first method for managing connections in said telecommunications network 100 is described below making reference to the sequence diagram of figure 2.

According to a first embodiment, said second server 102, said third server 103 or said fourth server 104 is adapted to receive and interpret said XML/HTTP message.

To that end for example a simplified document type definition (well known as DTD e.g. from ISO 8879) is used in the respective servers:

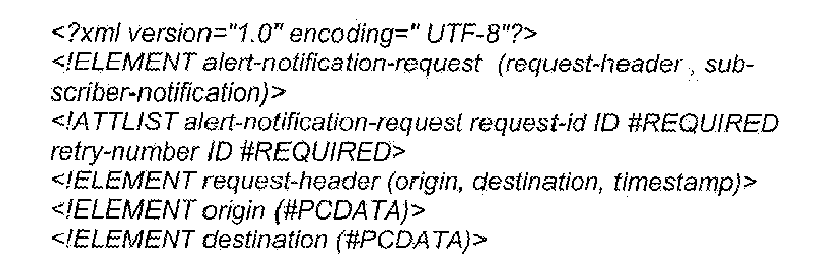

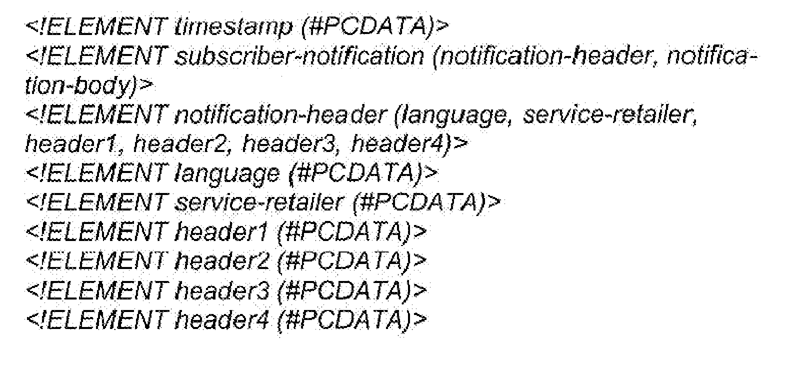

Goal of said first method is to inform the appropriate of said servers about an action the respective server shall perform in order manage said connection.

Said first method starts for example whenever said trigger is determined by said client 107.

After the start a message 200, Request, is sent from said client 107 to said sixth server 106 executing said charging enforcement function (PCEF). Said message 200 is for example an IP-CAN session establishment request according to said 3GPP TS 23.203 V10.1.0.

Upon receipt of said message 200, said sixth server 106 sends a message 201, Request, to said first server 101. Said message 201 is for example a Diameter credit control request (CCR) according to RFC 4006, in particular including a request for credit, e.g. initial, requested=10, and information about said client 107 or said user.

Upon receipt of said message 201, in a step 202, said first server 101, determines connection parameters from said information about said client 107 or said user for example by executing said computer program representing said real time payment system.

Said information about said client 107 or said user may be a unique identifier, like a number or name.

The following first non exhaustive list gives examples of said connection parameters:
- granted credit, e.g. granted=10
- data subscription lifecycle,
- available credit on said user's main balance,
- said user's available data sub-balance,
- a data consumption status, e.g. determined dynamically when data consumption of said user reaches defined thresholds or when said user subscribes to or purchases additional credit or data bundle.

Said credit or data bundles are measured for example according to aforementioned 3GPP technical standards in monthly subscription of 10$ for 10 GB and 2Mbit/s speed, or monthly 8$ for 5GB & 512 Kbits. Furthermore said requested or granted credits are counted in agreed upon units, e.g. 10 = 100 seconds.

Said connection parameters are either received from the respective resource of said telecommunications network or stored in a data base.

The following second non-exhaustive list gives examples of predetermined actions that are for example stored in said data base:
- cut-off data connection,
- forbid data access until next billing cycle
- slow down data access speed
- allow only web browsing inside operator portal with lower speed (for example 256 kbits)
- allow original speed on all data links.

These and other connection parameters, predetermined actions as well as methods for receiving or determining them are well known to the person skilled in the art, e.g. from said 3GPP technical specifications.

Said information about said client 107 or said user is associated with said connection parameters, for example in said data base.

Upon determination of said connection parameters, said first server 101 sends a message 203, Response, to said sixth server 106. Said message 203 is for example a Diameter credit control Answer (CCA) according to RFC 4006, in particular including information about said granted credit for said client 107 or said user.

Furthermore upon determination of said connection parameters, said first server 101 in a step 204 determines a message 205, Request. Said message 205 is for example said XML/HTTP message. Said message 205 is for example determined by said first server 101 according to a predefined rule described using the following non exhaustive list.

Said non exhaustive list gives an example of said predefined rule, predefined actions and predetermined trigger conditions that must be met in order Lo trigger sending of said XML/HTTP message to the respective recipient within said telecommunications network 100. Said predetermined trigger conditions and said recipients are for example stored in said data base and associated with said predefined actions and recipients according to said predefined rule.

| Predefine action | Trigger condition | Recipient |
|---|---|---|
| Data connection cut-off: | - no available credit on user's main balance or user's data sub-balance, | - policy charging and rules function (PCRF) |
| - cut-off data connection, | | - subscription profile repository (SPR) |
| - forbid data access until next billing cycle. | - dedicated data sub-balance or bundle is exhausted, | |
| | - data consumption reached a defined threshold in main balance, | |
| | - recurring tees of data subscription are not paid at begin of cycle | |
| Data connection speed slowdown: | - dedicated bundle for recurring data subscription is exhausted, | - policy charging and rules function (PCRF) |
| - slow down data | | |
| access speed - allow only web browsing inside operator portal with lower speed (for example 256 kbits) | - data consumption reaches a threshold, e.g. in main 5GB, in main balance | - subscription profile repository (SPR) |
| Data connection | - refill of credit | - policy charging |
| revert to original speed: | or data bundle was received after processing of data subscription recurring fee, recurring fee, | and rules function (PCRF) |
| - allow original speed on all data links | | - subscription profile repository (SPR) |
| | - beginning of next billing cycle was reached and the real time payment system successfully processed data subscription recurring fee for payment, or data bundle sub-balance was recharged after successful payment of fees, | |
| | - recharge of balance using a prepaid card was received before end of billing cycle, | |
| | - purchase order for an additional data bundle (data Pack of 2GB for 2$ or 3$ for daily data access) was received. | |
| Restrict data access; | - no more available credit in data sub-balance | - policy charging and rules function (PCRF) |
| - allow only free web browsing on operator's portal using internal access point name (APN) with lower speed. | | - operators access point name (APN) |
| Revert data access to original privileges/rights: | - refill of credit or data bundle was received after processing of data subscription recurring fee, | - policy charging and rules function (PCRF) |
| - allow original speed on all data links and access to all data via all access point names (APN) | | - operators access point name (APN) |
| | - beginning of next billing cycle was reached and the real time payment system successfully processed data subscription recurring fee for payment, or data bundle sub-balance was recharged after successful payment of fees, | |
| | - recharge of balance using a prepaid card was received before end | |
| | of billing cycle, | |
| | - purchase order for an additional data bundle (data Pack of 2GB for 2$ or 3$ for daily data access) was received. | |

Said message 205 is for example determined by first finding the trigger condition that is met by comparing the current connection parameter of said client 107 or said user to the data base entries for said client 107 or said user, and then finding the recipient and predetermined action associated with said client 107 or said user and said trigger condition.

An example of said message 203 is given below using XML:

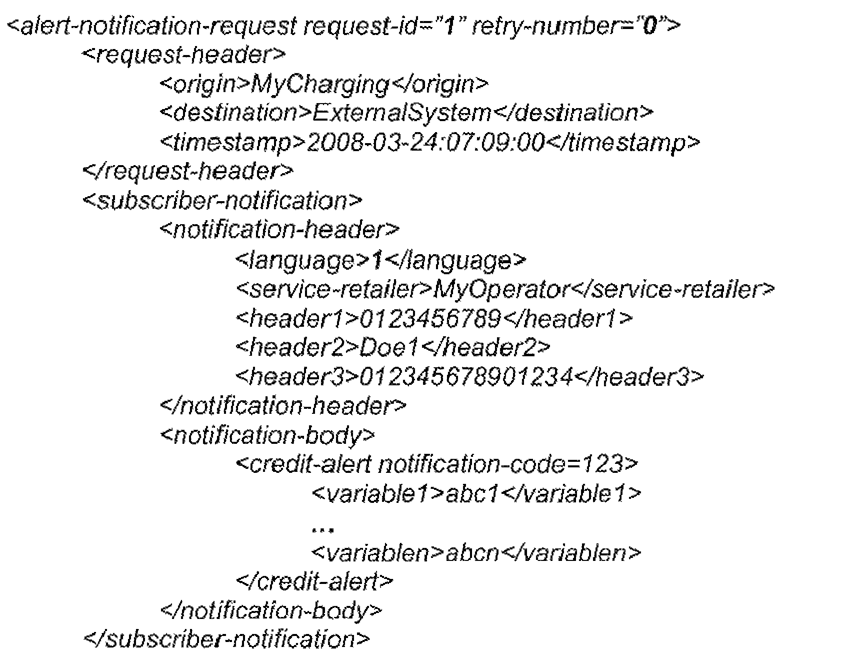

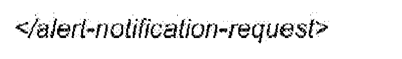

Alternatively any other syntax, e.g. simplified document type definition (well known as DTD e.g. from ISO 8879) may be used:

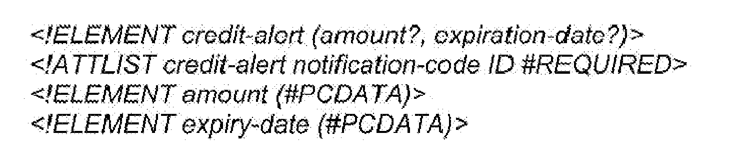

In this case, said XML message may be for example:

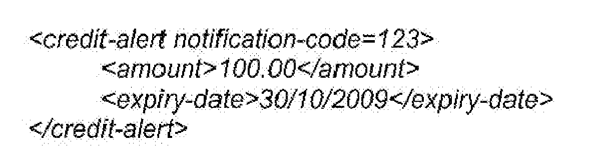

Said message 205 is sent by said first server 101 to said recipient, e.g. said second server 102, said third server 103 or said fourth server 104.

Upon receipt of said message 205 in a step 205, said recipient, e.g. said second server 102, said third server 103 or said fourth server 104 execute said predetermined action included in said message 205.

For example said second server 102, said third server 103 or said fourth server 104 interprets said XML/HTTP message, extracts the predetermined action and executes it.

For example said XML/HTTP message triggers said second server 102 to execute said computer program representing said policy charging and rules function (PCRF) in order to update of said policy control charging rule (PCC-Rule).

For example said XML/HTTP message triggers said third server 103 to send information from said subscription profile repository (SPR) in order to establish the requested connection.

For example said XML/HTTP message triggers said fourth server 104 to an update to the access rights of said client using said access point name.

Methods for performing said predetermined actions as well as said predetermined action are well known to the person skilled in the art, for example from said 3GPP technical specifications.

Upon receipt of said message 203 said sixth server 106 sends a message 207, Response, to said client 107. Said message 207 is for example an IP-CAN session response according to said 3GPP TS 23.203 V10.1.0. Said message 207 is for example determined by said policy charging and rules function (PCRF) executing on said sixth server 106. Said message 207 may include a notification to said user about his/her credit level. Said notification may be sent via a short message service (well known as SMS), Unstructured Supplementary Service Data (well known as USSD) or electronic mail instead.

Afterwards said first server 101, said second server 102, said third server 103 or said fourth server 104 as well as all other network resources operate, for example as defined in the aforementioned 3GPP specifications, to maintain said connection.

During said connection, said first server 101 by executing said computer program representing said real time payment system continues to determine said connection parameters from said information about said client 107 or said user as described above.

Upon any finding of any of the aforementioned trigger conditions to be met, said first server 101 by executing said computer program representing real time payment system triggers another message 205, e.g. another XML/HTTP message with the appropriate content.

This means that additionally to said notification to said user, i.e. a SMS, USSD, email, to inform said user about his/her credit levels, or subscription status also the other servers are informed directly of the predefined action they should take in order to match the changes to the connection parameters.

In the same way said connection may be disconnected.

In a preferred embodiment the XML/HTTP messages are sent in real time to said recipients, i.e. said servers.

In a second embodiment, said second server 102, said third server 103 or said fourth server 104 are not adapted to interpret said XML/HTTP messages. In this case said fifth server 105 is the recipient for said message 203, e.g. said XML/HTML message sent hy said first server 101.

Furthermore, said message 205, e.g. said XML/HTTP message is interpreted by said fifth server 105 to identify said recipient.

Afterwards, said application for protocol conversion executes to convert said XML/HTTP message into the appropriate protocol for each recipient.

In this case said first message comprises for example an instruction to update a policy and charging rule (well known from 3GPP TS 23.203 V10.1.0 as PCC-rule) in said policy charging and rules function (PCRF) according to the Gx interface (well known from 3GPP TS 29.210 V6.7.0),

In this case said second message for example comprises an instruction to update a subscriber profile in said subscription profile repository (SPR) according to the Sh interface (well known from 3GPP TS 29.328 V10.0.0).

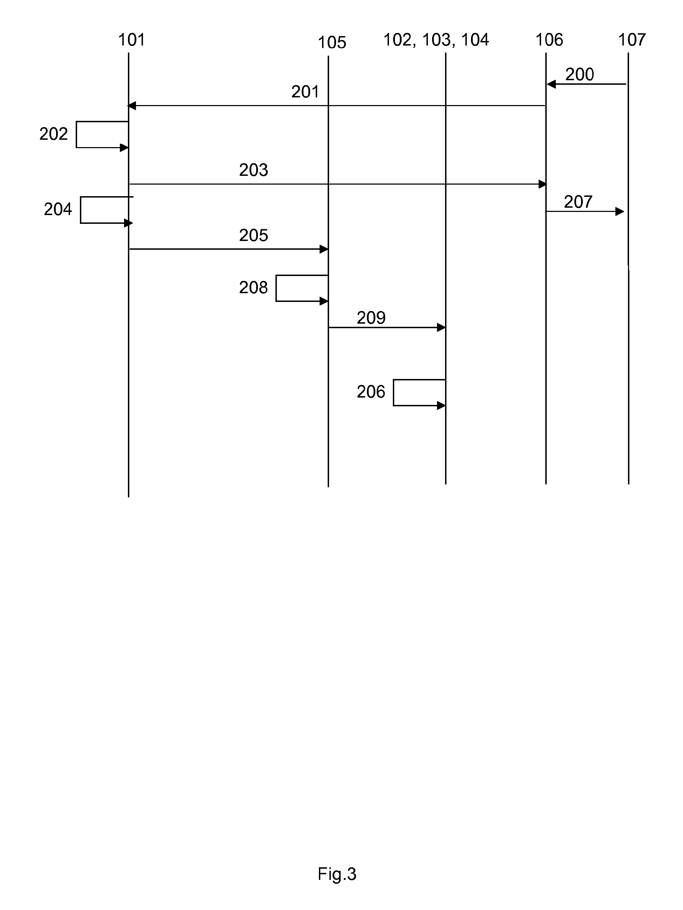

A second method for managing connections in said telecommunications network 100 is described below making reference to the sequence diagram of figure 3.

According to said second method, said messages 200, 201, 203 and 205 as well as said steps 202, 204 and 206 are used as described in said first method.

Instead of sending said message 205 to said recipients directly, said message 205 is sent by said first server 101 to said fifth server 105.

Additionally a message 209 is sent from said fifth server 105 to said recipients, e.g. said second server 102, said third server 103 or said fourth server 104.

Said message 209 is determined by said fifth server 105 in a step 208 for example by executing said application for protocol conversion. The protocol that said XML/HTTP message is converted to is in this case selected for example from said data base depending on the supported protocol of the respective server.

For example said first message and said second message are determined as described above and sent to said second server 102 and said third server 103 respectively using the appropriate protocol.

According to said first embodiment or said second embodiment based on said XML/HTTP messages received directly or via said application, i.e. said fifth server 105, said second server 102 executing said computer program representing said policy charging and rules function (PCRF), said third server 103 executing said computer program representing said subscription profile repository (SPR) or said third server 103 executing said computer program representing said gateway are triggered to perform the respective predefined action.

The invention may also be applied in case some of said servers are adapted to interpret XML/HTTP messages and others are not. In this case said first server 101 is adapted to send said XML/HTML message to said fifth server 105 and to said servers accepting said XML/HTML messages.

In any case said predetermined rule may be extended to contain additionally information about whether or not said servers accept said XML/HTML message or not, e.g. in an additional attribute that is associated to the respective server in said data base.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for managing connections in a telecommunications network (100), wherein a server adapted to execute a computer program representing a real time payment system (101), is adapted to determine a message including a predetermined action depending on information about connection parameters and a predetermined rule, and to send information about said predetermined action to a network resource (102, 103, 104, 105, 106).

2. The method according to claim 1, wherein said message is a XML/HTTP message.

3. The method according to claim 1, wherein said message is determined and sent in real time.

4. The method according to claim 1, wherein an application converts said message from XML/HTTP to a protocol that an intended recipient of said message accepts.

5. A system for managing connections in a telecommunications network (100) comprising a network resource (102, 103, 104, 105, 106), a server and a recipient, wherein said server is adapted to execute a computer program representing a real time payment system (101), wherein said server is adapted to determine a message including a predetermined action depending on information about connection parameters and a predetermined rule, and to send information about said predetermined action to said network resource (102, 103, 104, 105, 106), wherein said network resource (102, 103, 104, 105, 106) is adapted to execute an application that converts said message from XML/HTTP to a protocol that said recipient accepts, and to send said message according to said protocol to said recipient.

6. A server for managing connections in a telecommunications network (100), adapted to execute a computer program representing a real time payment system (101), and adapted to determine a message including a predetermined action depending on information about connection parameters and a predetermined rule, and to send information about said predetermined action to a network resource (102, 103, 104, 105, 106).

7. A network resource (102, 103, 104, 105, 106) for managing connections in a telecommunications network (100), adapted to receive a XML/HTTP message including information about a predetermined action determined by a real time payment system (101) on information about connection parameters and a predetermined rule, and to execute an application that converts a message from XML/HTTP to a protocol that the intended recipient of said message accepts and to send said message according to said protocol to said intended recipient.
